# EUROPÄISCHE PATENTANMELDUNG

(11) **EP 1 826 054 A2**
(43) Veröffentlichungstag der Anmeldung: **29.08.2007**
(21) Anmeldenummer: 07003142.2
(22) Anmeldetag: 14.02.2007
(51) Int. Cl.: B60K 17/10, E02F 9/20, E02F 9/22, F16H 61/46

(54) **Verfahren sowie Vorrichtung zur Regelung eines hydraulischen Antriebssystems**

(30) Priorität: 27.02.2006 DE 102006009063
(71) Anmelder: Liebherr-Werk Nenzing GmbH, 6710 Nenzing (AT)
(72) Erfinder: Krimbacher, Norbert, Dr., 6822 Satteins (AT)
(74) Vertreter: Thoma, Michael

(57) **Zusammenfassung**

Die vorliegende Erfindung betrifft ein Verfahren zur Regelung eines hydraulischen Antriebssystems, insbesondere eines Krans oder einer Baumaschine, das einen geschlossenen Hydraulikkreis mit einer Hydraulikpumpe und einem Hydraulikmotor umfasst, bei dem in Abhängigkeit eines Soll-Werts eines Abtriebsparameters des Hydraulikkreises ein Stellsignal zur Einstellung der Hydraulikpumpe und/oder des Hydraulikmotors bereitgestellt wird. Die Erfindung betrifft weiterhin eine Vorrichtung zur Regelung eines solchen hydraulischen Antriebssystems, das einen geschlossenen Hydraulikkreis mit einer Hydraulikpumpe und einem Hydraulikmotor umfasst, mit einem Stellsignalkreis zur Erzeugung eines Stellsignals für die Hydraulikpumpe und/oder den Hydraulikmotor in Abhängigkeit eines Soll-Werts eines Abtriebsparameters des Hydraulikkreises. Die Erfindung betrifft schließlich einen Kran und/oder eine sonstige Baumaschine mit einem hydraulischen Antriebssystem, das einen geschlossenen Hydraulikkreis mit einer Hydraulikpumpe und einem Hydraulikmotor umfasst, sowie einer Regelvorrichtung zur Regelung des hydraulischen Antriebssystems mit einem Stellsignalkreis zur Erzeugung eines Stellsignals für die Hydraulikpumpe und/oder den Hydraulikmotor in Abhängigkeit eines Abtriebsparameters des Hydraulikkreises. Es wird eine Regelung vorgeschlagen, deren Prinzip darauf basiert, die Stellsignale, die für die einzelnen hydraulischen Komponenten aufgrund der gewünschten Abtriebsparameter bestimmt werden, durch Überprüfung von Leistungsvorgaben, die extern oder intern vorgegeben werden können, zu begrenzen bzw. zu reduzieren, um hierdurch die Stabilität des Systems zu gewährleisten. Die erzeugten Stellsignale werden so begrenzt bzw. reduziert, dass die vom Hydrauliksystem erzeugte Leistung und/oder die in das Hydrauliksystem rückgeführte Leistung die Leistungsvorgaben nicht überschreitet. Erfindungsgemäß wird das Stellsignal in Abhängigkeit eines Abgleichs eines vorgegebenen Leistungswerts mit einem aktuellen Leistungswert der Hydraulikpumpe und/oder des Hydraulikmotors von einem übergeordneten Steuerungsbaustein begrenzt und/oder reduziert. Hierdurch können zu rasche und/oder zu große Stellbewegungen der Stellorgane der Hydraulikkomponenten verhindert werden, die zu Unstabilitäten des Antriebssystems und/oder zu unerwünschten Abtriebsparametern führen würden.

## Beschreibung

Die vorliegende Erfindung betrifft ein Verfahren zur Regelung eines hydraulischen Antriebssystems, insbesondere eines Krans oder einer Baumaschine, das einen geschlossenen Hydraulikkreis mit einer Hydraulikpumpe und einem Hydraulikmotor umfasst, bei dem in Abhängigkeit eines Soll-Werts eines Abtriebsparameters des Hydraulikkreises ein Stellsignal zur Einstellung der Hydraulikpumpe und/oder des Hydraulikmotors bereitgestellt wird. Die Erfindung betrifft weiterhin eine Vorrichtung zur Regelung eines solchen hydraulischen Antriebssystems, das einen geschlossenen Hydraulikkreis mit einer Hydraulikpumpe und einem Hydraulikmotor umfasst, mit einem Stellsignalkreis zur Erzeugung eines Stellsignals für die Hydraulikpumpe und/oder den Hydraulikmotor in Abhängigkeit eines Soll-Werts eines Abtriebsparameters des Hydraulikkreises. Die Erfindung betrifft schließlich einen Kran und/oder eine sonstige Baumaschine mit einem hydraulischen Antriebssystem, das einen geschlossenen Hydraulikkreis mit einer Hydraulikpumpe und einem Hydraulikmotor umfasst, sowie einer Regelvorrichtung zur Regelung des hydraulischen Antriebssystems mit einem Stellsignalkreis zur Erzeugung eines Stellsignals für die Hydraulikpumpe und/oder den Hydraulikmotor in Abhängigkeit eines Abtriebsparameters des Hydraulikkreises.

Krane, aber auch andere Baumaschinen, besitzen regelmäßig hydraulische Antriebssysteme mit zumindest einem geschlossenen Hydraulikkreis, der eine Hydraulikpumpe in Kombination mit einem Hydraulikmotor besitzt. Mittels solcher hydraulischer Antriebssysteme werden beispielsweise an Kranen verschiedene Antriebsfunktionen realisiert, insbesondere können Hubwindenantriebe, Kettenantriebe oder Radantriebe in dieser Weise realisiert sein. Dabei wird regelmäßig die Hydraulikpumpe von einem Antriebsaggregat, wie beispielsweise einem Verbrennungsmotor, her angetrieben. Der von der Pumpe erzeugte Hydraulikstrom wird von dem damit gekoppelten Hydraulikmotor in die entsprechende Stellbewegung umgesetzt. Um die entsprechende Stellbewegung präzise und stabil zu steuern, muss die Drehzahl des Hydraulikmotors entsprechend geregelt werden, wobei hier das Fördervolumen der Hydraulikpumpe und das Schluckvolumen des Hydraulikmotors verstellt werden können, beispielsweise indem verstellbare Schrägscheibenausführungen dieser Komponenten verwendet werden, wobei jedoch auch andere Ausführungen möglich sind. Dabei soll einerseits bei entsprechenden Fahr- bzw. Steuerbefehlen ein schnelles Ansprechen des Systems erreicht werden. Andererseits kann ein zu schnelles Betätigen der Stellorgane bzw. ein Übersteuern derselben zu Instabilitäten des Antriebssystems führen. Beispielsweise kann ein zu rasches Erhöhen der Förderleistung der Hydraulikpumpe und/oder des Schluckvolumens des Hydraulikmotors zu einem zu starken Abfall des Antriebsaggregats oder gar einem Abwürgen des Dieselmotors führen. Beispielsweise kann auch ein zu rasches nach oben Fahren des Abtriebsdrehmoments zu einem Durchdrehen einzelner Antriebsräder führen, wenn das System als Radantrieb verwendet wird und beispielsweise auf einer Schotterpiste gefahren wird.

Der vorliegenden Erfindung liegt die Aufgabe zugrunde, ein verbessertes Verfahren sowie eine Vorrichtung zur Regelung eines solchen hydraulischen Antriebssystems der eingangs genannten Art zu schaffen, die Nachteile des Standes der Technik vermeiden und letzteren in vorteilhafter Weise weiterbilden. Vorzugsweise soll eine stabile Regelung des hydraulischen Antriebssystems erreicht werden, die verschiedenen Randbedingungen für die Kraftübertragung bzw. Abtriebskraft Rechnung tragen kann.

Erfindungsgemäß wird diese Aufgabe durch ein Verfahren nach Anspruch 1, eine Vorrichtung gemäß Anspruch 14 sowie durch einen Kran bzw. eine Baumaschine gemäß Anspruch 15 gelöst. Bevorzugte Ausgestaltungen der Erfindung sind Gegenstand der abhängigen Ansprüche.

Es wird also eine Regelung vorgeschlagen, deren Prinzip darauf basiert, die Stellsignale, die für die einzelnen hydraulischen Komponenten aufgrund der gewünschten Abtriebsparameter bestimmt werden, durch Überprüfung von Leistungsvorgaben, die extern oder intern vorgegeben werden können, zu begrenzen bzw. zu reduzieren, um hierdurch die Stabilität des Systems zu gewährleisten. Die erzeugten Stellsignale werden so begrenzt bzw. reduziert, dass die vom Hydrauliksystem erzeugte Leistung und/oder die in das Hydrauliksystem rückgeführte Leistung die Leistungsvorgaben nicht überschreitet. Erfindungsgemäß wird das Stellsignal in Abhängigkeit eines Abgleichs eines vorgegebenen Leistungswerts mit einem aktuellen Leistungswert der Hydraulikpumpe und/oder des Hydraulikmotors von einem übergeordneten Steuerungsbaustein begrenzt und/oder reduziert. Hierdurch können zu rasche und/oder zu große Stellbewegungen der Stellorgane der Hydraulikkomponenten verhindert werden, die zu Unstabilitäten des Antriebssystems und/oder zu unerwünschten Abtriebsparametern führen würden.

Vorteilhafterweise wird der jeweils vorgegebene Leistungswert und der jeweils aktuelle Leistungswert einem Regler zugeführt, von dem ein übergeordnetes Steuersignal bereitgestellt wird, in Abhängigkeit dessen das Stellsignal für die Stellorgane der Hydraulikkomponenten reduziert und/oder begrenzt wird.

In Weiterbildung der Erfindung können dabei verschiedene Leistungswerte vorgegeben werden, mit denen der jeweils aktuelle Leistungswert abgeglichen wird. Vorteilhafterweise kann der vorgegebene Leistungswert für den Leistungsabgleich in Abhängigkeit einer maximal zur Verfügung stehenden Leistung eines den Hydraulikkreis antreibenden Antriebsaggregats und/oder des gesamten Antriebssystems bestimmt werden. Hierdurch wird sichergestellt, dass die Stellorgane der Hydraulikkreiskomponenten nicht in Bereiche hineingefahren werden, die zu Instabilitäten des gesamten Antriebssystems führen würden. Insbesondere wird hierdurch verhindert, dass für die Hydraulikpumpe ein Fördervolumen und/oder für den Hydraulikmotor ein Schluckvolumen eingestellt wird, was zu einem Abwürgen des Antriebsaggregats führen würde. Die aktuell am Hydraulikantrieb abgegebene Leistung wird nicht über die maximal vom Antrieb bereitstellbare Leistung gefahren.

Alternativ oder zusätzlich kann der vorgegebene Leistungswert in Abhängigkeit eines Betriebsmodus des Antriebssystems oder des Krans bzw. der Baumaschine bestimmt werden, in dem das Antriebssystem eingesetzt ist. Insbesondere können hierdurch Leistungsvorgaben durch verfahrensbedingte Funktionseinschränkungen, wie z. B. maximale Leistungszufuhr in besonderen Betriebssituationen, berücksichtigt werden.

Alternativ oder zusätzlich kann der vorgegebene Leistungswert aus einer Leistungsbilanz aller in dem Antriebssystem verbundenen Antriebsgruppen gewonnen werden. Durch Aufstellen einer Leistungsbilanz über das komplette Gerät kann eine entsprechende Leistungsverteilung im Gerät realisiert werden, womit sich aus der endlich zur Verfügung stehenden Antriebsleistung entsprechende Anteile für den jeweiligen Regelkreis bzw. Hydraulikkreis ergeben.

Ferner kann nach einer vorteilhaften Weiterbildung der Erfindung die Leistungsgrenze durch Beschränkung der maximal übertragbaren Leistung des geschlossenen Hydraulikkreises bei aktueller Drehzahl berechnet werden, wobei die maximal übertragbare Leistung vorzugsweise aufgrund einer Druckbeschränkung in dem geschlossenen Hydraulikkreis bestimmt wird. Anhand von Sensoren oder von mathematischen Modellen, welche die hydraulischen Einheiten nachbilden, kann der Volumenstrom der Komponenten gemessen bzw. geschätzt werden, so dass sodann mit Hilfe dieses Volumenstroms und den entsprechenden Grenzwerten für Druckniveaus eine interne Leistungsgrenze berechnet werden kann, die für den Leistungsabgleich zur Reduzierung bzw. Begrenzung des Stellsignals herangezogen wird. Insbesondere kann der vorgegebene Leistungswert in Abhängigkeit einer aktuellen Drehzahl der Hydraulikpumpe und/oder des Hydraulikmotors und in Abhängigkeit eines Druckgrenzwertes des Hydraulikkreises bestimmt werden.

In Weiterbildung der Erfindung wird dabei von den verschiedenen möglichen Leistungsgrenzen, die den Regelkreis beeinflussen, stets die kleinste herangezogen. Die Begrenzung bzw. Reduzierung des bereitgestellten Stellsignals orientiert sich an der kleinsten Leistungsvorgabe.

Gemäß einer vorteilhaften Ausführung der Erfindung werden die Stellsignale für die Hydraulikkomponenten des Hydraulikkreises sowohl in Abhängigkeit eines vorgegebenen Leistungswertes für die vom System bereitgestellte Leistung als auch in Abhängigkeit eines vorgegebenen Leistungswerts für die in das System rückgeführte Leistung begrenzt bzw. reduziert. Das Stellsignal kann dabei insbesondere einerseits in Abhängigkeit eines Abgleichs des aktuellen Pumpenleistungswerts mit einem vorgegebenen maximalen Leistungswert für die bereitzustellende Leistung und andererseits in Abhängigkeit eines Abgleichs des aktuellen Motorleistungswerts mit einem vorgegebenen maximalen Leistungswert für die rückzuführende Leistung begrenzt und/oder reduziert werden. Hierdurch kann einerseits sichergestellt werden, dass die vom Hydraulikkreis bereitgestellte Leistung nicht über das Ziel hinausschießt, während andererseits erreicht wird, dass das vom Hydraulikkreis bereitgestellte Bremsmoment im Einklang mit den hierfür vorgesehenen Leistungsvorgaben ist.

Die Stellsignale für die Hydraulikkomponenten können grundsätzlich in Abhängigkeit verschiedener Abtriebsparameter bestimmt werden. Insbesondere kann in Weiterbildung der Erfindung die Drehzahl des Hydraulikmotors der Abtriebsparameter sein, in Abhängigkeit dessen die Stellsignale bereitgestellt werden.

Vorteilhafterweise wird dabei das Stellsignal in Abhängigkeit des Signals eines Reglers erzeugt, dem der Soll-Wert und der Ist-Wert des genannten Arbeitsparameters zugeführt werden. Im Falle der Drehzahl des Hydraulikmotors wird also das Stellsignal von einem Drehzahlregler erzeugt und sonach in der vorgeschriebenen Weise begrenzt bzw. reduziert.

In vorteilhafter Weiterbildung der Erfindung kann das Stellsignal auch in Abhängigkeit eines Vorsteuerungssignals erzeugt werden, das in Abhängigkeit des Soll-Werts des genannten Abtriebsparameters und einem Ist-Wert eines Betriebsparameters der Hydraulikpumpe und/oder des Hydraulikmotors bestimmt wird. Insbesondere kann die Vorsteuerung die Ist-Drehzahl der Hydraulikpumpe berücksichtigen. Bei vorgegebener Ist-Drehzahl der Hydraulikpumpe einerseits und andererseits einer vorbestimmten Soll-Drehzahl des Hydraulikmotors kann hieraus der Hydraulikkreis auf ein bestimmtes Übersetzungsverhältnis eingestellt werden, das über bestimmte Stellsignale erzielbar ist.

Vorteilhafterweise umfasst der Stellsignalkreis einerseits die genannte Vorsteuerung und andererseits die oben genannte Regelung, so dass sozusagen über die Vorsteuerung das Stellsignal grob vorgegeben wird und über den Regler feine Abweichungen ausgeglichen werden können.

In Weiterbildung der Erfindung wird dabei ein zunächst dimensionsloses Stellsignal bereitgestellt, das sodann in Abhängigkeit des Abgleichs des jeweils vorgegebenen Leistungswerts mit dem zugehörigen aktuellen Leistungswert des Hydraulikkreises begrenzt bzw. reduziert wird, und schließlich von einer Ansteuerstufe auf das jeweilige Stellorgan des Hydraulikkreises gegeben wird.

Die Erfindung wird nachfolgend anhand eines bevorzugten Ausführungsbeispiels und zugehöriger Zeichnungen näher erläutert. In den Zeichnungen zeigen:

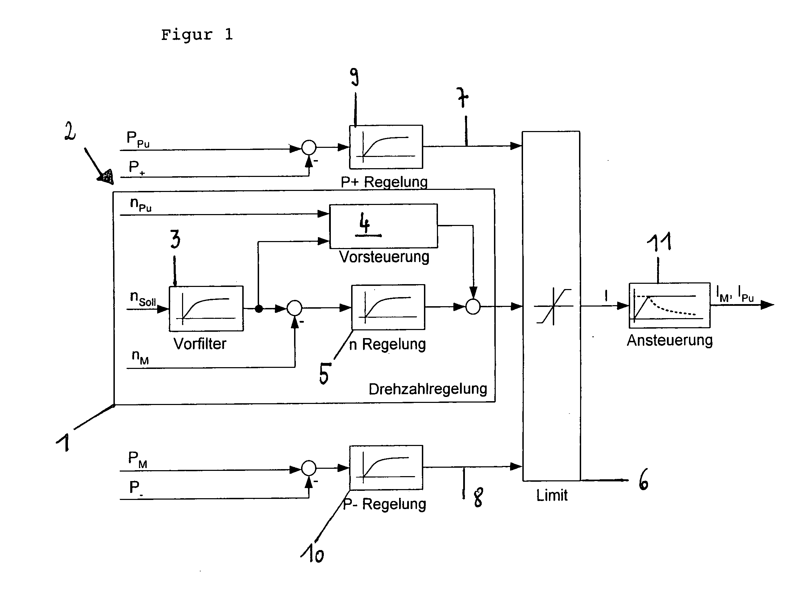

- Fig. 1:: eine schematische Darstellung des Regelkreises zur Ansteuerung der Hydraulikpumpe und des Hydraulikmotors eines geschlossenen Hydraulikkreises, der vorzugsweise für einen nicht eigens dargestellten Kran oder eine ähnliche Baumaschine eingesetzt ist und zur Regelung eines Hubwindenantriebs, eines Kettenantriebs oder eines Radantriebssysterns eines solchen Krans Verwendung finden kann.

Der in Figur 1 dargestellte Regelkreisabschnitt 1 der Regelvorrichtung 2 dient der Erzeugung eines dimensionslosen Stellsignals I und ist in der gezeichneten Ausführung als Drehzahlregelung ausgebildet. Eine in Abhängigkeit diverser Randbedingungen bestimmbare Soll-Drehzahl n_{Soll} des Hydraulikmotors wird zunächst durch einen Vorfilter 3 gegeben und zusammen mit der Ist-Drehzahl n_{Pu} der Hydraulikpumpe in einen Vorsteuerbaustein 4 gegeben, der über die bekannten Größen des geschlossenen Hydraulikkreises einschließlich Pumpengröße, Motorgröße und Drehzahl bzw. Drehzahlverhältnissen ein dimensionsloses Stellsignal I berechnet. Andererseits wird das gefilterte Signal n_{Soll}, das die Soll-Drehzahl des Hydraulikmotors wiedergibt, zusammen mit der Ist-Drehzahl n_{M} des Hydraulikmotors einem Drehzahlregler 5 zugeführt, um entsprechende Abweichungen zwischen Stellsignal und erzielter Drehzahl zu kompensieren. Aus der genannten Vorsteuerung und der Drehzahlregelung zusammen wird das genannte dimensionslose Stellsignal I erzeugt.

Dieses dimensionslose Stellsignal I wird in einem Steuerungsbaustein 6 begrenzt bzw. reduziert, und zwar in Abhängigkeit von übergeordneten Steuerungssignalen 7 und 8, die aus entsprechenden übergeordneten Leistungsreglern 9 und 10 kommen.

Dem übergeordneten Leistungsregler 9 wird dabei einerseits die aktuelle dem Hydraulikkreis zugeführte Leistung P_{Pu} und andererseits der vorgegebene Leistungswert P₊ zugeführt, die von dem Regler 9 miteinander abgeglichen werden. Der vorgegebene Leistungswert P₊ kann dabei in der zuvor beschriebenen Weise bestimmt werden, beispielsweise kann er als die maximale zur Verfügung stehende Leistung des Antriebsaggregats festgesetzt werden. Überschreitet der aktuelle Leistungswert P_{Pu} den vorgegebenen Leistungswert P₊, wird von dem Steuerungsbaustein 6 das erzeugte dimensionslose Stellsignal I entsprechend reduziert, damit die Stellorgane der Hydraulikpumpe und des Hydraulikmotors nicht in Stellbereiche hineingefahren werden, die die aktuelle Leistung P_{Pu} größer werden ließen als die vorgegebene Leistung P₊.

Sozusagen spiegelbildlich umgekehrt erfolgt ein Abgleich der jeweils aktuell am Hydraulikmotor rückgeführten Leistung P_{M} mit einem entsprechend vorgegebenen Leistungswert P₋, der ebenfalls wie eingangs beschrieben in verschiedener Weise bestimmt werden kann, beispielsweise als das maximale Bremsmoment festgesetzt werden kann, das der Hydraulikmotor nicht überschreiten soll.

Die Rückleistungsvorgaben können dabei aus verfahrenstechnischen Randbedingungen, aus der maximal möglichen Leistungszufuhr an das Antriebsaggregat und/oder unter Verwendung von Messungen oder Schätzungen und entsprechenden Grenzwerten für Druckniveaus im Hydrauliksystem bestimmt werden.

## Patentansprüche

1. Verfahren zur Regelung eines hydraulischen Antriebssystems, insbesondere eines Krans oder einer Baumaschine, das einen geschlossenen Hydraulikkreis mit einer Hydraulikpumpe und einem Hydraulikmotor umfasst, bei dem in Abhängigkeit eines Soll-Werts (n_{Soll}) eines Abtriebsparameters des Hydraulikkreises ein Stellsignal (I) zur Einstellung der Hydraulikpumpe und/oder des Hydraulikmotors bereitgestellt wird, **dadurch gekennzeichnet, dass** das Stellsignal (I) in Abhängigkeit eines Abgleichs eines vorgegebenen Leistungswerts (P₊; P₋) mit einem aktuellen Leistungswert (P_{Pu}; P_{M}) der Hydraulikpumpe und/oder des Hydraulikmotors von einem übergeordneten Steuerungsbaustein (6) begrenzt und/oder reduziert wird.

2. Verfahren nach dem vorhergehenden Anspruch, wobei der vorgegebene Leistungswert (P₊; P₋) und der aktuelle Leistungswert (P_{Pu}; P_{M}) einem Regler (9; 10) zugeführt werden, von dem ein übergeordnetes Steuersignal (7; 8) bereitgestellt wird, in Abhängigkeit dessen das Stellsignal (I) reduziert und/oder begrenzt wird.

3. Verfahren nach einem der vorhergehenden Ansprüche, wobei der vorgegebene Leistungswert (P₊; P₋) in Abhängigkeit eines Betriebsmodus und/oder einer Betriebssituation bestimmt wird.

4. Verfahren nach einem der vorhergehenden Ansprüche, wobei der vorgegebene Leistungswert (P₊; P₋) in Abhängigkeit einer maximal zur Verfügung stehenden Leistung des Antriebssystems und/oder eines den Hydraulikkreis antreibenden Antriebsaggregats bestimmt wird.

5. Verfahren nach einem der vorhergehenden Ansprüche, wobei der vorgegebene Leistungswert (P₊; P₋) in Abhängigkeit einer Leistungsbilanz aller im Antriebssystem verbundener Antriebsgruppen bestimmt wird.

6. Verfahren nach einem der vorhergehenden Ansprüche, wobei der vorgegebene Leistungswert (P₊; P₋) in Abhängigkeit einer aktuellen Drehzahl (n_{Pu}; n_{M}) der Hydraulikpumpe und/oder des Hydraulikmotors und einem Druckgrenzwert des Hydraulikkreises bestimmt wird.

7. Verfahren nach einem der vorhergehenden Ansprüche, wobei das Stellsignal (I) einerseits in Abhängigkeit eines Abgleichs eines aktuellen Pumpenleistungswerts (P_{Pu}) mit einem vorgegebenen maximalen Leistungswerts für die bereitzustellende Leistung und andererseits in Abhängigkeit eines Abgleichs eines aktuellen Motorleistungswerts (P_{M}) mit einem vorgegebenen maximalen Leistungswert für die rückzuführende Leistung begrenzt und/oder reduziert wird.

8. Verfahren nach einem der vorhergehenden Ansprüche, wobei das Stellsignal (I) in Abhängigkeit des Signals eines Reglers (5) bereitgestellt wird, dem der Soll-Wert und der Ist-Wert des genannten Abtriebsparameters (n_{Soll}, n_{M}) zugeführt werden.

9. Verfahren nach einem der vorhergehenden Ansprüche, wobei der Abtriebsparameter die Drehzahl des Hydraulikmotors ist.

10. Verfahren nach einem der vorhergehenden Ansprüche, wobei das Stellsignal (I) in Abhängigkeit eines Vorsteuerungssignals bereitgestellt wird, das in Abhängigkeit des Soll-Werts (n_{Soll}) des genannten Abtriebsparameters und eines Ist-Werts (n_{Pu}; n_{M}) eines Betriebsparameters der Hydraulikpumpe und/oder des Hydraulikmotors bestimmt wird.

11. Verfahren nach dem vorhergehenden Anspruch, wobei der Arbeitsparameter die Ist-Drehzahl (n_{Pu}) der Hydraulikpumpe ist.

12. Verfahren nach einem der vorhergehenden Ansprüche, wobei das Stellsignal (I) zunächst dimensionslos bereitgestellt, sodann in Abhängigkeit des Abgleichs des vorgegebenen Leistungswerts (P₊; P₋) mit dem jeweils aktuellen Leistungswert (P_{Pu}; P_{M}) begrenzt und/oder reduziert wird, und sodann von einer Ansteuerstufe (11) auf das jeweilige Stellorgan des geschlossenen Hydraulikkreises gegeben wird.

13. Verfahren nach dem vorhergehenden Anspruch, wobei die Ansteuerstufe (11) ein Stellsignal (I_{M}) für den Hydraulikmotor und ein Stellsignal (I_{Pu}) für die Hydraulikpumpe bereitstellt.

14. Regelvorrichtung zur Regelung eines hydraulischen Antriebssystems, insbesondere eines Krans oder einer Baumaschine, das einen geschlossenen Hydraulikkreis mit einer Hydraulikpumpe und einem Hydraulikmotor umfasst, mit einem Steuersignalkreis (1) zur Bereitstellung eines Stellsignals zur Einstellung der Hydraulikpumpe und/oder des Hydraulikmotors in Abhängigkeit eines Soll-Werts eines Arbeitsparameters des Hydraulikkreises, **gekennzeichnet durch** einen übergeordneten Steuerkreis (6, 9, 10) zur Begrenzung und/oder Reduzierung des Stellsignals in Abhängigkeit eines Abgleichs eines vorgegebenen Leistungswerts (P₊; P₋) mit einem aktuellen Leistungswert (P_{Pu}; P_{M}) der Hydraulikpumpe und/oder des Hydraulikmotors.

15. Kran und/oder Baumaschine mit einem hydraulischen Antriebssystem, das einen geschlossenen Hydraulikkreis mit einer Hydraulikpumpe und einem Hydraulikmotor umfasst, sowie einer Regelvorrichtung (2) zur Regelung des hydraulischen Antriebssystems, wobei die Regelvorrichtung einen Stellsignalkreis (1) zur Bereitstellung eines Stellsignals zur Einstellung der Hydraulikpumpe und/oder des Hydraulikmotors in Abhängigkeit eines Soll-Werts eines Abtriebsparameters des Hydraulikkreises aufweist, **gekennzeichnet durch** einen übergeordneten Steuerkreis (6, 9, 10) zur Begrenzung und/oder Reduzierung des Stellsignals in Abhängigkeit eines Abgleichs eines vorgegebenen Leistungswerts (P₊; P₋) mit einem aktuellen Leistungswert (P_{Pu}; P_{M}) der Hydraulikpumpe und/oder des Hydraulikmotors.
